# EUROPEAN PATENT APPLICATION

(11) **EP 4 628 566 A2**
(43) Date of publication of application: **08.10.2025**
(21) Application number: 25195435.0
(22) Date of filing: 21.03.2024
(51) Int. Cl.: C10N 50/10

(54) **SLIDING MEMBER, FIXING DEVICE, AND IMAGE FORMING APPARATUS**

(30) Priority: 07.06.2023 JP 2023094388
(62) Divisional of application: 24165035.7
(71) Applicant: FUJIFILM Business Innovation Corp., Minato-ku Tokyo (JP)
(72) Inventor: OHARA, Hideaki, Ebina-shi, Kanagawa (JP); OMORI, Kenji, Ebina-shi, Kanagawa (JP); YAMASAKI, Junko, Ebina-shi, Kanagawa (JP); YOSHIKAWA, Ryohei, Ebina-shi, Kanagawa (JP)
(74) Representative: Becker Kurig & Partner Patentanwälte mbB

(57) **Abstract**

A sliding member (60) having a sliding surface configured to include a heat-resistant thermoplastic resin other than a fluororesin, and resin particles having a siloxane group other than the heat-resistant thermoplastic resin, in which an average particle diameter of the resin particles is 0.1 µm or more and 10 µm or less, a surface roughness Rsk of the sliding surface is 1.0 or less, and a surface exposure rate of the resin particles on the sliding surface is 2% or more.

## Description

### BACKGROUND OF THE INVENTION

### (i) Field of the Invention

The present invention relates to a sliding member, a fixing device, and an image forming apparatus.

### (ii) Description of Related Art

For example, JP1998-213984A (JP-H10-213984A) discloses "an image fixing device including a heating fixing roll that is rotatably disposed, an endless belt that is disposed to be travelable while being in contact with the heating fixing roll, and a pressing pad that is disposed inside the endless belt and presses the heating fixing roll via the endless belt so that a nip section through which a recording sheet holding an unfixed toner image can pass is formed between the endless belt and the heating fixing roll, in which a modified silicone oil is interposed between the pressing pad and the endless belt as a lubricant".

In addition, JP2001-249558A discloses "an image fixing device in which a pressing member disposed inside a film tubular body presses the film tubular body against a heating drive roll to form a nip section through which a recording material passes onto an outer surface of the film tubular body, while a fluororesin is disposed on a sliding contact surface of the pressing member and a lubricant is interposed between the fluororesin and an inner surface of the film tubular body to make the film tubular body travelable, in which a lipophilicity-treated fluororesin is used on a sliding contact surface of the pressing member or a lipophilicity-imparting agent is used in combination with the fluororesin".

In addition, JP6142385B discloses "a low-friction member containing a first fluororesin powder having a median diameter in a range of 10 µm or more and 100 µm or less and a second fluororesin powder having a median diameter in a range of 0.1 µm or more and 5 µm or less in a polyimide resin, each dispersed in the member, in which a surface roughness Rsk is 0.500 or more, and a surface exposure rate of the fluororesin is 15.0% or more".

### SUMMARY OF THE INVENTION

An object of the present invention is to provide a sliding member having excellent maintainability of sliding resistance, as compared with a sliding member having a sliding surface configured to include a glass cloth and a fluororesin impregnated in the glass cloth.

Specific means for achieving the above-described object includes the following aspects.
<1> A sliding member having a sliding surface configured to include:
   a heat-resistant thermoplastic resin other than a fluororesin; and
   resin particles having a siloxane group other than the heat-resistant thermoplastic resin,
   in which an average particle diameter of the resin particles is 0.1 µm or more and 10 µm or less,
   a surface roughness Rsk of the sliding surface is 1.0 or less, and
   a surface exposure rate of the resin particles on the sliding surface is 2% or more.
<2> The sliding member according to <1>,
   in which the average particle diameter of the resin particles is 0.5 µm or more and 4 µm or less.
<3> The sliding member according to <1> or <2>,
   in which the surface roughness Rsk of the sliding surface is 0.6 or less.
<4> The sliding member according to any one of <1> to <3>,
   in which the surface exposure rate of the resin particles on the sliding surface is 3% or more.
<5> The sliding member according to any one of <1> to <4>,
   in which the heat-resistant thermoplastic resin is at least one resin selected from the group consisting of a polyether ether ketone resin, a polyphenylene sulfide resin, a polyetherimide resin, and a polyphenylsulfone resin.
<6> The sliding member according to any one of <1> to <5>,
   in which the heat-resistant thermoplastic resin is at least one resin selected from the group consisting of a polyether ether ketone resin and a polyphenylene sulfide resin.
<7> The sliding member according to any one of <1> to <6>,
   in which the resin particles are thermosetting silicone resin particles.
<8> The sliding member according to <7>,
   in which the thermosetting silicone resin particles are modified thermosetting silicone resin particles.
<9> The sliding member according to any one of <1> to <8>,
   in which a content of the resin particles is 1.0% by mass or more and 20.0% by mass or less with respect to the heat-resistant thermoplastic resin.
<10> The sliding member according to <9>,
   in which the content of the resin particles is 3% by mass or more and 25% by mass or less with respect to the heat-resistant thermoplastic resin.
<11> The sliding member according to any one of <1> to <10>,
   in which the average particle diameter of the resin particles is 0.5 µm or more and 4 µm or less,
   the surface roughness Rsk of the sliding surface is 0.6 or less, and
   the surface exposure rate of the resin particles on the sliding surface is 3% or more.
<12> The sliding member according to any one of <1> to <11>,
   in which the heat-resistant thermoplastic resin is at least one resin selected from the group consisting of a polyether ether ketone resin, a polyphenylene sulfide resin, a polyetherimide resin, and a polyphenylsulfone resin,
   a content of the resin particles is 1.0% by mass or more and 20.0% by mass or less with respect to the heat-resistant thermoplastic resin, and
   the resin particles are thermosetting silicone resin particles.
<13> A fixing device including:
   a first rotating body;
   a second rotating body disposed in contact with the first rotating body;
   a pressing member that is disposed in an inner peripheral surface of the second rotating body and presses the second rotating body against the first rotating body from the inner peripheral surface of the second rotating body;
   the sliding member according to any one of <1> to <12>, interposed between the inner peripheral surface of the second rotating body and the pressing member, and
   a lubricant interposed between the inner peripheral surface of the second rotating body and the sliding member.
<14> The fixing device according to <13>,
   in which the inner peripheral surface of the second rotating body is configured to include a resin having at least one group selected from the group consisting of an amide group, an imide group, a ketone group, and a sulfide group.
<15> The fixing device according to <13> or <14>,
   in which the lubricant includes an oil having a siloxane group as a main chain.
<16> An image forming apparatus including:
   an image holder;
   a latent image forming device that forms a latent image on a surface of the image holder;
   a development device that develops the latent image into a toner image using a developer;
   a transfer device that transfers the developed toner image to a recording medium; and
   the fixing device according to any one of <13> to <15>, fixing the toner image on the recording medium.

According to <1>, it is possible to provide a sliding member having excellent maintainability of sliding resistance, as compared with a sliding member having a sliding surface configured to include a glass cloth and a fluororesin impregnated in the glass cloth.

According to <2>, it is possible to provide a sliding member having excellent maintainability of sliding resistance, as compared with a case where the average particle diameter of the resin particles is less than 0.5 µm or more than 4 µm.

According to <3>, it is possible to provide a sliding member having excellent maintainability of sliding resistance, as compared with a case where the surface roughness Rsk of the sliding surface is more than 0.6.

According to <4>, it is possible to provide a sliding member having excellent maintainability of sliding resistance, as compared with a case where the surface exposure rate of the resin particles on the sliding surface is less than 3%.

According to <5>, it is possible to provide a sliding member having excellent maintainability of sliding resistance, as compared with a case where the heat-resistant thermoplastic resin is a fluororesin.

According to <6>, it is possible to provide a sliding member having excellent maintainability of sliding resistance, as compared with a case where the heat-resistant thermoplastic resin is a polyphenylene sulfide resin.

According to <7>, it is possible to provide a sliding member having excellent maintainability of sliding resistance, as compared with a case where the resin particles are fluororesin particles.

According to <8>, it is possible to provide a sliding member having excellent maintainability of sliding resistance, as compared with a case where the thermosetting silicone resin particles are unmodified thermosetting silicone resin particles.

According to <9>, it is possible to provide a sliding member having excellent maintainability of sliding resistance, as compared with a case where the content of the resin particles is less than 1.0% by mass or more than 20.0% by mass with respect to the heat-resistant thermoplastic resin.

According to <10>, it is possible to provide a sliding member having excellent maintainability of sliding resistance, as compared with a case where the content of the resin particles is less than 3% by mass or more than 25% by mass with respect to the heat-resistant thermoplastic resin.

According to <11>, it is possible to provide a sliding member having excellent maintainability of sliding resistance, as compared with a case where the average particle diameter of the resin particles is less than 0.5 µm or more than 4 µm, a case where the surface roughness Rsk of the sliding surface is more than 0.6, or a case where the surface exposure rate of the resin particles on the sliding surface is less than 3%.

According to <12>, it is possible to provide a sliding member having excellent maintainability of sliding resistance, as compared with a case where the heat-resistant thermoplastic resin is a fluororesin, a case where the resin particles are fluororesin particles, or a case where the content of the resin particles is less than 1.0% by mass or more than 20.0% by mass with respect to the heat-resistant thermoplastic resin.

According to <13>, a fixing device capable of forming an image having a reduced gloss unevenness while suppressing an increase in rotational torque of the second rotating body, as compared with a case where a sliding member having a sliding surface configured to include a glass cloth and a fluororesin impregnated in the glass cloth is applied, is provided.

According to <14>, a fixing device capable of forming an image having a reduced gloss unevenness while suppressing an increase in rotational torque of the second rotating body, as compared with a case where an inner peripheral surface of the second rotating body is configured with a polyimide resin, is provided.

According to <15>, a fixing device capable of forming an image having a reduced gloss unevenness while suppressing an increase in rotational torque of the second rotating body, as compared with a case where the lubricant is composed only of a fluoropolyether oil, is provided.

According to <16>, an image forming apparatus capable of forming an image having a reduced gloss unevenness while suppressing an increase in rotational torque of the second rotating body of the fixing device, as compared with a case where a sliding member having a sliding surface configured to include a glass cloth and a fluororesin impregnated in the glass cloth is applied, is provided.

### BRIEF DESCRIPTION OF THE DRAWINGS

Exemplary embodiment(s) of the present invention will be described in detail based on the following figures, wherein:
Fig. 1 is a schematic view showing an example of an image forming apparatus according to the present exemplary embodiment; and
Fig. 2 is a schematic view showing an example of a fixing device according to the present exemplary embodiment.

### DETAILED DESCRIPTION OF THE INVENTION

Hereinafter, exemplary embodiments that are examples of the present invention will be described. The following descriptions and examples merely illustrate the exemplary embodiments, and do not limit the scope of the invention.

Regarding ranges of numerical values described stepwise in the present specification, the upper limit value or lower limit value of a range of numerical values may be replaced with the upper limit value or lower limit value of another range of numerical values described stepwise. In addition, in a numerical range described in the present specification, an upper limit value or a lower limit value described in the numerical range may be replaced with a value shown in an example.

Each component may include a plurality of corresponding substances.

In a case where the amount of each component in a composition is mentioned and plural kinds of substances corresponding to each component are present in the composition, unless otherwise specified, the amount means a total amount of the plural kinds of substances present in the composition.

In a case where the exemplary embodiments are described with reference to the drawings, the members having substantially the identical function are marked with the same reference numeral throughout the all drawings such that the members will not be redundantly described.

### <Sliding Member>

In the sliding member according to the present exemplary embodiment, a sliding surface is configured to include a heat-resistant thermoplastic resin other than a fluororesin, and resin particles having a siloxane group other than the heat-resistant thermoplastic resin.

An average particle diameter of the resin particles is 0.1 µm or more and 10 µm or less.

A surface roughness Rsk of the sliding surface is 1.0 or less.

A surface exposure rate of the resin particles on the sliding surface is 2% or more.

According to the configurations, the sliding member according to the present exemplary embodiment is a sliding member having excellent maintainability of sliding resistance. A reason therefor is presumed as follows.

Usually, a fluororesin with which low friction and heat resistance can be obtained is used in the sliding member. Specifically, in the sliding member, a fluororesin sheet, a sheet in which a fibrous fluororesin is woven, a sheet in which a fluororesin is impregnated in a glass cloth, a sheet in which fluororesin particles are dispersed in a polyimide resin, or the like is used.

However, the wear of the fluororesin progresses in a short period of time. In addition, since the fluororesin has a low strength, the fluororesin is remarkably deformed with respect to a tensile or compressive force. Therefore, an increase in sliding resistance of the sliding surface is caused.

Moreover, in the sheet in which a fluororesin is impregnated in a glass cloth, in a case where the fluororesin wears, the sliding resistance of the glass cloth is dominant as the sliding resistance of the sliding surface, and the sliding resistance of the sliding surface increases over time.

In addition, in a sheet in which fluororesin particles are dispersed in a polyimide resin, in a case where the fluororesin particles wear or are separated, the sliding resistance of the polyimide resin is dominant as the sliding resistance of the sliding surface and the sliding resistance of the sliding surface increases over time.

On the contrary, in the sliding member according to the present exemplary embodiment, resin particles having a siloxane group with an average particle diameter of 0.1 µm or more and 10 µm or less are contained in a heat-resistant thermoplastic resin other than the fluororesin, and a surface roughness Rsk of the sliding surface and a surface exposure rate of the resin particles on the sliding surface are each set to 2% or more.

As a result, the exposed resin particles exert lubrication capability on the sliding surface, difficult to separate from the sliding surface, and extend on the sliding surface to form a thin film.

From the above, it is presumed that the sliding member according to the present exemplary embodiment has excellent maintainability of sliding resistance.

Hereinafter, the sliding member according to the present exemplary embodiment will be described in detail.

A sliding sheet has a sliding surface configured to include a heat-resistant thermoplastic resin other than a fluororesin, and resin particles having a siloxane group other than the heat-resistant thermoplastic resin.

Specifically, the sliding sheet is configured with a monolayer body of the resin base material layer including the heat-resistant thermoplastic resin other than a fluororesin, and the resin particles having a siloxane group other than the heat-resistant thermoplastic resin. That is, the sliding sheet is a resin sheet including these components.

It should be noted that the sliding sheet may be a laminate of a resin base material layer constituting the sliding surface and another layer provided on a side opposite to the sliding surface of the resin base material layer.

Examples of the heat-resistant thermoplastic resin include a polyether ether ketone resin, a polyphenylene sulfide resin, a polyetherimide resin, a polyether sulfone resin, a polysulfone resin, and a polyphenylsulfone resin.

Among the resins, as the heat-resistant thermoplastic resin, for example, at least one resin selected from the group consisting of the polyether ether ketone resin, the polyphenylene sulfide resin, the polyetherimide resin, and the polyphenylsulfone resin is preferable, and at least one resin selected from the group consisting of the polyether ether ketone resin and the polyphenylene sulfide resin is more preferable.

These resins (in particular, the polyether ether ketone resin and the polyphenylene sulfide resin) are preferable, for example, since the resins have high wear resistance, a high toughness, and a high elastic modulus.

Examples of the resin particles having a siloxane group include a resin having a polysiloxane structure in a main chain or a side chain.

Specific examples of the resin particles having a siloxane group include particles such as thermosetting silicone resin particles, a silicone oil gum, a silicone elastomer, and a siloxane-modified polyetherimide.

Among the resin particles, for example, the thermosetting silicone resin particles are preferable as the resin particles having a siloxane group. With this component, the sliding resistance of the sliding surface is lowered and the maintainability of sliding resistance is easily improved.

Here, the thermosetting silicone resin particles are silicone resin particles that are cured by heat and have rubber-like elasticity. It is preferable that the thermosetting silicone resin particles are unmodified thermosetting silicone resin particles, for example, since an affinity with the lubricant is increased and an increase in rotational torque of the pressurizing belt 40 is easily suppressed.

The silicone gum is a gum formed by molding a silicone oil having a molecular weight of 300,000 or more into a pellet shape.

An average particle diameter of the resin particles having a siloxane group is 0.1 µm or more and 10 µm or less. From the viewpoint of improving the maintainability of sliding resistance, the average particle diameter is, for example, preferably 0.5 µm or more and 4 µm or less, and more preferably 1 µm or more and 3 µm or less.

A method of measuring the average particle diameter of the resin particles is as follows.

A sample having a cut surface that has cut along a member thickness direction is obtained from a sliding member to be measured.

The cut surface of the sample is observed with an electron microscope, an area value of the resin particles is determined by image analysis, and a circle-equivalent diameter is calculated from the area value. Calculation of the circle-equivalent diameter is carried out 100 resin particles. A diameter (D50) taking up 50% in a volume-based cumulative frequency distribution of the obtained circle-equivalent diameter is adopted as the average particle diameter of the resin particles.

A content of the resin particles having a siloxane group is, for example, preferably 1.0% by mass or more and 20.0% by mass or less, more preferably 2.0% by mass or more and 15.0% by mass or less, and still more preferably, 5.0% by mass or more and 10.0% by mass or less with respect to the heat-resistant thermoplastic resin.

By setting the content of the resin having a siloxane group within the ranges, the surface roughness Rsk of the sliding surface and the surface exposure rate of the resin particles on the sliding surface can be easily adjusted to the ranges described earlier.

Therefore, the sliding resistance is lowered while the sliding sheet is provided with wear resistance. The maintainability of sliding resistance is easily improved.

The resin base material layer constituting the sliding surface may include other components, in addition to the resin. Examples of such other components include a conductive agent, a filler for improving mechanical strength, an antioxidant for preventing thermal deterioration, a surfactant, and a heat-resistant antioxidant.

In the sliding member according to the present exemplary embodiment, the surface roughness Rsk of the sliding surface is 1.0 or less. From the viewpoint of improving the maintainability of sliding resistance, the surface roughness Rsk is, for example, preferably 0.6 or less, and more preferably 0.5 or less. It should be noted that from the viewpoints of catching resistance with a mating material due to the retention amount and the shape of the lubricant, a lower limit of the surface roughness Rsk is, for example, 0.2 or more.

Furthermore, the range of the surface roughness Rsk indicates an absolute value. The surface roughness Rsk is a skewness Rsk of a roughness curve in a sliding direction on the sliding surface.

The surface roughness Rsk of the sliding surface is measured in accordance with JIS B0601 (2001). Specifically, the measurement is performed under the following conditions, using a surface roughness meter (Surfcom 1500SD, manufactured by Tokyo Seimitsu Co., Ltd.).
· Measurement type: Roughness measurement
· Measurement length: 1.0 mm
· Cut-off wavelength: 0.025 mm
· Measurement range: ±32.0 µm
· Measurement speed: 0.03 mm/s
· Cut-off type: 2RC (phase non-compensation)
· Inclination correction: Least-squares line correction
· λs Cut-off 300
· λs Cut-off: 0.0833 µm

In the sliding member according to the present exemplary embodiment, the surface exposure rate of the resin particles on the sliding surface is 2% or more. From the viewpoint of improving the maintainability of sliding resistance, the surface exposure rate of the resin particles is, for example, preferably 3% or more, and more preferably 5% or more. It should be noted that from the viewpoint of the wear resistance of the sliding surface, an upper limit of the surface exposure rate of the resin particles is, for example, 10% or less.

A method for measuring the surface exposure rate of the resin particles is as follows.

A sample having a sliding surface is obtained from a sliding member to be measured.

The sliding surface of the sample is observed with an electron microscope at a magnification of 2,000 and an area value of the exposed resin particles is determined by image analysis. Calculation of a proportion of the area value of the exposed resin particles to an area value of the observation field is carried out. Calculation of proportions of the area values of the resin particles is carried out in five visual fields. An arithmetic mean value of the proportions of the area values of the resin particles is used as the surface exposure rate of the resin particles.

Here, the surface roughness Rsk of the sliding surface and the surface exposure rate of the resin particles on the sliding surface are adjusted by, for example, the average particle diameter and the content of the resin particles.

### <Fixing Device/Image Forming Apparatus>

The fixing device according to the present exemplary embodiment is a specific fixing device, and includes a first rotating body, a second rotating body that is disposed in contact with the first rotating body, a pressing member that is disposed on an inner peripheral surface of the second rotating body and presses the second rotating body against the first rotating body from the inner peripheral surface of the second rotating body, and a sliding member interposed between the inner peripheral surface of the second rotating body and the pressing member, and a lubricant interposed between the inner peripheral surface of the second rotating body and the sliding member. Hereinafter, the fixing device including these members is also referred to as a "specific fixing device".

In the fixing device according to the present exemplary embodiment, the sliding member according to the present exemplary embodiment is applied as a sliding member.

The image forming apparatus according to the present exemplary embodiment includes:
an image holder,
a latent image forming device that forms a latent image on a surface of the image holder,
a development device that develops the latent image into a toner image using a developer,
a transfer device that transfers the toner image developed in a recording medium, and
a fixing device that fixes the toner image on the recording medium.

In the image forming apparatus according to the present exemplary embodiment, the fixing device according to the present exemplary embodiment is applied as a fixing device.

In the fixing device and the image forming apparatus according to the present exemplary embodiment, in a case where the sliding member according to the present exemplary embodiment is applied as a sliding member, for example, an image having a reduced gloss unevenness can be obtained while an increase in rotational torque of the second rotating body of the fixing device is suppressed.

In particular, in the fixing device and the image forming apparatus according to the present exemplary embodiment, from the viewpoint of suppressing an increase in rotational torque of the second rotating body and reducing the gloss unevenness, the inner peripheral surface of the second rotating body is preferably configured to include, for example, a resin having at least one group selected from the group consisting of an amide group, an imide group, a ketone group, and a sulfide group.

In addition, from the same viewpoint, the lubricant preferably includes, for example, an oil having a siloxane group as a main chain.

Here, in the related art, in order to form an image on an electrophotographic image forming apparatus such as a printer, a copying machine, and a facsimile, a toner image is transferred onto a recording medium such as a recording paper, and then the recording medium, on which the toner image has been transferred, is heated and pressurized by a fixing device to fix the toner image on a surface of the recording medium.

In the related art, various types of devices have been proposed as the fixing device, and the specific fixing device is known as one of the devices.

In the specific fixing device, a fluororesin with which a low friction and heat resistance can be obtained is used for the sliding member. Specifically, for the sliding member, a fluororesin sheet, a sheet in which a fibrous fluororesin is woven, or a sheet in which a fluororesin is impregnated in a glass cloth is used.

However, the wear of the fluororesin progresses in a short period of time. In addition, since the fluororesin has a low strength, the fluororesin is remarkably deformed with respect to a tensile or compressive force. Therefore, an increase in rotational torque of the second rotating body is caused.

In addition, since the sheet in which a fibrous fluororesin is woven and the sheet in which a fluororesin is impregnated in a glass cloth have a roughness on the surface, a stress is concentrated on the convex portions, which thus causes gloss unevenness in the obtained image.

In addition, in the specific fixing device, for example, a PTFE grease including a perfluoropolyether oil or the like is used as the lubricant.

However, the affinity between the inner peripheral surface of the second rotating body and the sliding surface of the sliding member, and the lubricant is low, and it is difficult for a thin film of the lubricant to be interposed between the inner peripheral surface of the second rotating body and the sliding surface of the sliding member over time. This also causes an increase in rotational torque of the second rotating body.

On the contrary, in the fixing device and the image forming apparatus according to the present exemplary embodiment, at least one selected from the group consisting of an amide group, an imide group, a ketone group, and a sulfide group is present on the inner peripheral surface of the second rotating body. The inner peripheral surface of the second rotating body in which these polar groups are present has a high affinity with an oil having a siloxane group as a main chain, which is applied as a lubricant.

In addition, a siloxane group derived from resin particles having a siloxane group is present on the sliding surface of the sliding member. Therefore, the sliding surface of the sliding member also has a high affinity with an oil having a siloxane group as a main chain, which is applied as a lubricant.

As a result, an image having a reduced gloss unevenness can be obtained while an increase in rotational torque of the second rotating body is suppressed.

In addition, since the sliding surface of the sliding member includes the heat-resistant thermoplastic resin other than a fluororesin, it is difficult for the wear to proceed in a short period of time. As a result, the increase in rotational torque of the second rotating body is reduced.

Hereinafter, an example of the image forming apparatus according to the present exemplary embodiment will be described with reference to drawings.

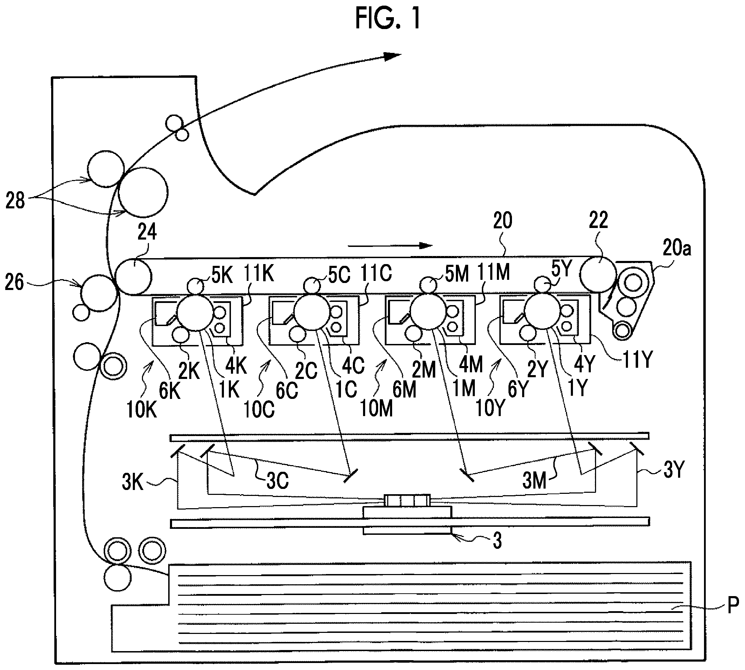

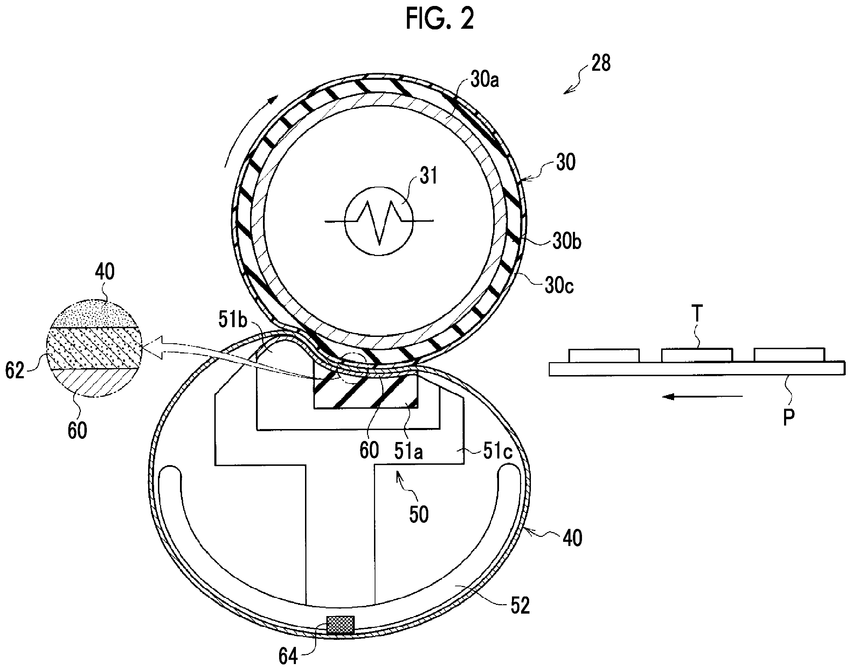

Fig. 1 is a schematic view showing an example of an image forming apparatus according to the present exemplary embodiment. Fig. 2 is a schematic view showing an example of a fixing device according to the present exemplary embodiment.

### (Configuration of Image Forming Apparatus)

As shown in Fig. 1, an image forming apparatus 100 according to the present exemplary embodiment includes first to fourth process cartridges 10Y, 10M, 10C, and 10K (an example of image forming units) in an electrophotographic method that outputs an image of each of colors, yellow (Y), magenta (M), cyan (C), and black (K), based on color-separated image data. These process cartridges 10Y, 10M, 10C, and 10K are arranged to be separated from each other along the outer peripheral surface of an intermediate transfer belt 20. Furthermore, these process cartridges 10Y, 10M, 10C, and 10K are detachable from a main body of the image forming apparatus.

The intermediate transfer belt 20 as an intermediate transfer body is provided above each of process cartridges 10Y, 10M, 10C, and 10K (in Fig. 1) so that an outer peripheral surface thereof faces each process cartridge. The intermediate transfer belt 20 is wound around a drive roller 22 disposed apart from each other and a support roller 24 in contact with the inner peripheral surface of the intermediate transfer belt 20 to be disposed under application of a tension and set to travel endlessly in a direction from the first process cartridge 10Y to the fourth process cartridge 10K.

Furthermore, the support roller 24 is pressed in a direction away from the drive roller 22 by an elastic member such as a spring which is not shown in the drawing, and a tension is applied to the intermediate transfer belt 20 wound between both the rollers. In addition, an intermediate transfer body cleaning device 20a facing the drive roller 22 is provided on the outer peripheral surface of the intermediate transfer belt 20.

Since the first to fourth process cartridges 10Y, 10M, 10C, and 10K have substantially the identical configuration, the first process cartridge 10Y forming a yellow image, disposed on the upstream side in the traveling direction of the intermediate transfer belt, will be described herein as a representative. Further, identical reference numerals marked with magenta (M), cyan (C), and black (K) instead of yellow (Y) are assigned to portions that are identical to the reference numerals in the first process cartridge 10Y, such that the description on the second to fourth process cartridges 10M, 10C, and 10K will not be repeated.

The first process cartridge 10Y has a photoreceptor 1Y that acts as an image holder. Around the photoreceptor 1Y, a charging roller (an example of a charging device) 2Y that charges a surface of the photoreceptor 1Y to a predetermined potential, a development device 4Y that develops an electrostatic latent image by supplying a charged toner included in a developer to an electrostatic latent image, and a photoreceptor cleaning device 6Y that removes the toner remaining on a surface of the photoreceptor 1Y after the primary transfer are disposed in this order. These are integrally configured in a housing 11Y (housing). Similarly, in the first process cartridges 10M to 10Y, the respective members are integrally configured in housings 11M to 11Y (housing).

Together with the first process cartridge 10Y, a primary transfer roller 5Y (an example of a primary transfer device) that transfers the developed toner image onto the intermediate transfer belt 20, and an exposure device 3 that forms an electrostatic latent image by subjecting a charged surface to exposure with a laser beam 3Y based on a color-decomposed image signal are disposed to configure an image forming unit.

Furthermore, the charging roller 2Y and the exposure device 3 correspond to an example of a latent image forming device.

The primary transfer roller 5Y is disposed on the inner side of the intermediate transfer belt 20, at a position facing the photoreceptor 1Y. Further, a bias power supply (not shown) that applies a primary transfer bias is connected to each of the primary transfer rollers 5Y, 5M, 5C, and 5K. Each of the bias power supplies changes the transfer bias applied to each of the primary transfer rollers under the control of a controller which is not shown in the drawing.

### (Configuration of Fixing Device)

As shown in Fig. 2, the fixing device 28 includes a heating roll 30 (an example of a first rotating body) and a pressurizing belt 40 (an example of a second rotating body), and the heating roll 30 and the pressurizing belt 40 are provided to face each other. The pressurizing belt 40 is pressed against the heating roll 30 by a pressing pad 50 (an example of a pressing member) disposed inside the periphery thereof, and is guided along a belt traveling guide 52 under a pressure contact to form a contact section and driven by receiving a driving force from the heating roll 30.

A sliding sheet 60 (an example of a sliding member) is interposed between the pressurizing belt 40 and the pressing pad 50. A lubricant 62 (an example of a lubricant) is interposed between the sliding sheet 60 and the inner peripheral surface of the pressurizing belt 40. Furthermore, the lubricant 62 is supplied onto the inner peripheral surface of the pressurizing belt 40 by, for example, a lubricant supply member 64 provided in a part of the belt traveling guide 52, and interposed between the sliding sheet 60 and the inner peripheral surface of the pressurizing belt 40.

Here, in Fig. 2, T represents a toner image.

### - Heating Roll 30 (One Example of First Rotating Body) -

The heating roll 30 is configured, for example, by sequentially forming an elastic body layer 30b and a release layer 30c on a metal hollow core metal core 30a having a heating source 31 such as a halogen lamp inside.

The metal core 30a is configured with, for example, a cylindrical body made of a metal such as aluminum and stainless steel. The elastic body layer 30b is configured with, for example, HTV silicone rubber or fluororubber (a rubber hardness of JIS-A: about 45 degrees, and a rubber hardness based on JIS K6301, as measured by a spring type of Durometer Type A manufactured by Teclock Co., Ltd. under a load of 1,000 gf added) at a thickness of about 2 mm or more and 5 mm or less. The release layer 30c is configured with, for example, fluorine rubber, silicone rubber, or a fluororesin at a thickness of 20 µm or more and 50 µm or less. Obviously, the present invention is not limited to these, and materials that are known in the related art may be used.

In the heating roll 30, a speed of the fixing roll is adjusted by a drive source which is not shown in the drawing, and the fixing roll is rotationally driven, for example, at a peripheral speed of 260 mm/sec. The outer diameter of the heating roll 30 is generally, for example, about 25 mm or more and 80 mm or less.

A surface temperature of the heating roll 30 is detected by a temperature sensor coming into contact with the surface, which is not shown in the drawing, and is controlled by a control circuit which is not shown in the drawing, such that the surface temperature is, for example, 175°C.

### - Pressurizing Belt 40 (One Example of Second Rotating Body) -

The inner peripheral surface of the pressurizing belt 40 is configured to include a resin having at least one group selected from the group consisting of an amide group, an imide group, a ketone group, and a sulfide group. This resin is a heat-resistant resin. Furthermore, the term "heat-resistant" means a characteristic that melting or decomposition does not occur in a case of reaching a raised temperature of a fixing device (for example, a fixing temperature). The same applies hereinafter.

Specifically, the inner peripheral surface of the pressurizing belt 40 has a resin base material including a resin having at least one group selected from the group consisting of an amide group, an imide group, a ketone group, and a sulfide group.

The pressurizing belt 40 may be a monolayer body of the resin base material layer constituting the inner peripheral surface of the pressurizing belt 40, or may be a laminate having the resin base material layer constituting the inner peripheral surface of the pressurizing belt 40, an elastic layer provided on the resin base material layer, and a release layer provided on the elastic layer, or a laminate having the resin base material layer constituting the inner peripheral surface of the pressurizing belt 40 and a release layer provided on the resin base material layer.

The resin base material layer will be described.

Specific examples of the resin with at least one group selected from the group consisting of an amide group, an imide group, a ketone group, and a sulfide group include a polyimide resin, a polyamide imide resin, a polyether ether ketone resin, a polyphenylene sulfide resin, a polyether sulfone resin, a polysulfone resin, and a polyphenylsulfone resin.

As the resin, among the resins, for example, at least one resin selected from the group consisting of the polyimide resin, the polyamideimide resin, the polyether ether ketone resin, and the polyphenylene sulfide resin is preferable, and the polyimide resin is more preferable.

These resins (in particular, the polyimide resins) have high wear resistance and a high affinity with a lubricant. Therefore, an increase in rotational torque of the pressurizing belt 40 is easily suppressed.

Examples of the polyimide resin include an imidized polyamic acid (polyimide resin precursor) which is a polymer of a tetracarboxylic dianhydride and a diamine compound.

Examples of the polyimide resin include a resin having a constitutional unit represented by General Formula (I).

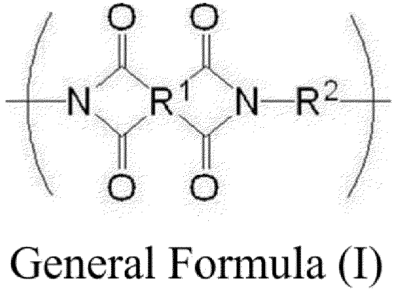

In General Formula (I), R¹ represents a tetravalent organic group, and R² represents a divalent organic group.

Examples of the tetravalent organic group represented by R¹ include an aromatic group, an aliphatic group, a cyclic aliphatic group, a group obtained by combining an aromatic group and an aliphatic group, and a group obtained by the substitution of these. Specific examples of the tetravalent organic group include a residue of a tetracarboxylic dianhydride which will be described later.

Examples of the divalent organic group represented by R² include an aromatic group, an aliphatic group, a cyclic aliphatic group, a group obtained by combining an aromatic group and an aliphatic group, and a group obtained by the substitution of these. Specific examples of the divalent organic group include a residue of a diamine compound which will be described later.

Specifically, examples of the tetracarboxylic dianhydride used as a raw material of the polyimide resin include a pyromellitic dianhydride, a 3,3',4,4'-benzophenone tetracarboxylic dianhydride, a 3,3',4,4'-biphenyltetracarboxylic dianhydride, a 2,3,3',4-biphenyltetracarboxylic dianhydride, a 2,3,6,7-naphthalenetetracarboxylic dianhydride, a 1,2,5,6-naphthalenetetracarboxylic dianhydride, a 1,4,5,8-naphthalenetetracarboxylic dianhydride, a 2,2'-bis(3,4-dicarboxyphenyl)sulfonic dianhydride, a perylene-3,4,9,10-Tetracarboxylic dianhydride, a bis(3,4-dicarboxyphenyl)ether dianhydride, and an ethylenetetracarboxylic dianhydride.

Specific examples of the diamine compound used as a raw material of the polyimide resin include 4,4'-diaminodiphenyl ether, 4,4'-diaminodiphenylmethane, 3,3'-diaminodiphenylmethane, 3,3'-dichlorobenzidine, 4,4'-diaminodiphenylsulfide, 3,3'-diaminodiphenylsulfone, 1,5-diaminonaphthalene, m-phenylenediamine, p-phenylenediamine, 3,3'-dimethyl 4,4'-biphenyldiamine, benzidine, 3,3'-dimethylbenzidine, 3,3'-dimethoxybenzidine, 4,4'-diaminodiphenylsulfone, 4,4'-diaminodiphenylpropane, 2,4-bis(β-amino tert-butyl)toluene, bis(p-β-amino-tert-butylphenyl)ether, bis(p-β-methyl-δ-aminophenyl)benzene, bis-p-(1,1-dimethyl-5-amino-pentyl) benzene, 1-isopropyl-2,4-m-phenylenediamine, m-xylylene diamine, p-xylylene diamine, di(p-aminocyclohexyl)methane, hexamethylenediamine, heptamethylenediamine, octamethylenediamine, nonamethylenediamine, decamethylenediamine, diaminopropyltetramethylene, 3-methylheptamethylenediamine, 4,4-dimethylheptamethylenediamine, 2,11-diaminododecane, 1,2-bis-3-aminopropoxyethane, 2,2-dimethylpropylenediamine, 3-methoxyhexamethylenediamine, 2,5-dimethylheptamethylenediamine, 3-methylheptamethylenediamine, 5-methylnonamethylenediamine, 2,17-diaminoeicosadecane, 1,4-diaminocyclohexane, 1,10-diamino-1,10-dimethyldecane, 12-diaminooctadecane, 2,2-bis[4-(4-aminophenoxy)phenyl]propane, piperazine, H₂N(CH₂)₃O(CH₂)₂O(CH₂)NH₂, and H₂N(CH₂)₃S(CH₂)₃NH₂, H₂N(CH₂)₃N(CH₃)₂(CH₂)₃NH₂.

Examples of the polyamideimide resin include a resin having an imide bond and an amide bond in a repeating unit.

More specifically, examples of the polyamideimide resin include a polymer of a trivalent carboxylic acid compound (also called a tricarboxylic acid) having an acid anhydride group and a diisocyanate compound or a diamine compound.

As the tricarboxylic acid, for example, a trimellitic acid anhydride and a derivative thereof preferable. In addition to the tricarboxylic acid, a tetracarboxylic dianhydride, an aliphatic dicarboxylic acid, an aromatic dicarboxylic acid, or the like may also be used.

Examples of the diisocyanate compound include 3,3'-dimethylbiphenyl-4,4'-diisocyanate, 2,2'-dimethylbiphenyl-4,4'-diisocyanate, biphenyl-4,4'-diisocyanate, biphenyl-3,3'-diisocyanate, biphenyl-3,4'-diisocyanate, 3,3'-diethylbiphenyl-4,4'-diisocyanate, 2,2'-diethylbiphenyl-4,4'-diisocyanate, 3,3'-dimethoxybiphenyl-4,4'-diisocyanate, 2,2'-dimethoxybiphenyl-4,4'-diisocyanate, naphthalene-1,5-diisocyanate, and naphthalene-2,6-diisocyanate.

Examples of the diamine compound include a compound that has the same structure as the aforementioned isocyanate and has an amino group instead of an isocyanato group.

The resin base material layer may include other components in addition to the resin. Examples of such other components include a conductive agent, a filler for improving mechanical strength, an antioxidant for preventing thermal deterioration, a surfactant, and a heat-resistant antioxidant.

Here, the example in which the first rotating body is a heating roll and the second rotating body is a pressurizing belt has been described; however, an aspect in which the first rotating body is a pressure roll and the second rotating body is a heating belt is also included.

The configuration of the pressurizing roll in a case where the first rotating body is the pressurizing roll is, for example, preferably the same as the above-described configuration of the heating roll 30.

In a case where the second rotating body is a heating belt, the configuration of the heating belt is, for example, preferably the same as the above-described configuration of the pressurizing belt 40.

In particular, in a case where the second rotating body is a heating belt, the second rotating body may be a monolayer body of the resin base material layer constituting the inner peripheral surface of the heating belt, or may be a laminate having the resin base material layer constituting the inner peripheral surface of the heating belt, an elastic layer provided on the resin base material layer, and a release layer provided on the elastic layer; a laminate having the resin base material layer constituting the inner peripheral surface of the heating belt and a release layer provided on the resin base material layer; or a laminate having a metal layer on the resin base material layer constituting the inner peripheral surface of the heating belt and an elastic layer provided thereon, with a release layer being provided on the elastic layer.

The elastic layer will be described.

The elastic layer is configured to include a heat-resistant elastic material.

Examples of the heat-resistant elastic material include silicone rubber and fluororubber.

Examples of the silicone rubber include room-temperature vulcanizing (RTV) silicone rubber, high-temperature vulcanizing (HTV) silicone rubber, and liquid silicone rubber. Specific examples thereof include polydimethyl silicone rubber, methylvinyl silicone rubber, methylphenyl silicone rubber, and fluorosilicone rubber.

Examples of the fluororubber include vinylidene fluoride-based rubber, ethylene tetrafluoride/propylene-based rubber, ethylene tetrafluoride/perfluoromethylvinyl ether rubber, phosphazene-based rubber, and fluoropolyether.

The elastic layer may include other components. Examples of such other components include a fillers, a conducting agent, a softener (such as a paraffin-based softener), a processing aid (such as stearic acid), an antioxidant (such as an amine-based antioxidant), a vulcanizing agent (such as sulfur, a metal oxide, and a peroxide), and a functional filler (such as alumina).

The release layer will be described.

The release layer includes, for example, a heat-resistant release material.

Examples of the heat-resistant release material include fluororubber, a fluororesin, a silicone resin, and a polyimide resin.

Among the materials, for example, the fluororesin is preferable as the heat-resistant release material. Specific examples of the fluororesin include polytetrafluoroethylene (PTFE); and tetrafluoroethylene-perfluoroalkylvinyl ether copolymers (PFA) such as a tetrafluoroethylene-perfluoromethylvinyl ether copolymer (MFA), a tetrafluoroethylene-perfluoroethylvinyl ether copolymer (EFA), and a tetrafluoroethylene-perfluoropropylvinyl ether copolymer. The examples further include a tetrafluoroethylene-hexafluoropropylene copolymer (FEP), an ethylene-tetrafluoroethylene copolymer (ETFE), a vinylidene polyvinylidene fluoride (PVDF), an ethylene trichlorotrifluoride (PCTFE), and a vinylpolyfluoride (PVF).

Among the fluororesins, the polytetrafluoroethylene (PTFE); and the tetrafluoroethylene-perfluoroalkylvinyl ether copolymers (PFA) such as the tetrafluoroethylene-perfluoromethylvinyl ether copolymer (MFA) and the tetrafluoroethylene-perfluoroethylvinyl ether copolymer (EFA) are used, particularly in terms of heat resistance, mechanical characteristics, and the like.

A thickness of the release layer is set to, for example, preferably 5 µm to 100 µm, and more preferably 10 µm to 30 µm.

### - Pressing Pad 50 (One Example of Pressing Member) -

The pressing pad 50 has two pressing units 51a and 51b having different hardnesses along a traveling direction of a recording medium P. The pressing unit 51a on a recording medium P entry side in the pressing pad 50 is configured with a rubber-like elastic member, the pressing unit 51b on a recording medium P discharge side is configured with a hard pressure applying member such as a metal, and a pressure in a contact region on the recording medium P discharge side is set to be higher than that on the recording medium P entry side. The pressing units 51a and 51b are supported by a holder 51c and press the heating roll 30 from the inner peripheral surface of the pressurizing belt 40 via the sliding sheet 60 (an example of a sliding member).

### - Sliding Sheet 60 (One Example of Sliding Member) -

The sliding member according to the present exemplary embodiment is applied to the sliding sheet 60.

### - Lubricant 62 (One Example of Lubricant) -

The lubricant 62 includes an oil having a siloxane group as a main chain.

The oil having a siloxane group as the main chain is an oil having a polysiloxane structure as a main chain, and examples thereof include a silicone oil and various modified silicone oils.

Here, the oil having a siloxane group as a main chain is, for example, preferably an oil having a structure having a polar group in a side chain. In the case where the oil has a polar group, an affinity with the inner peripheral surface of the pressurizing belt 40 is high and an increase in rotational torque of the pressurizing belt 40 is easily suppressed.

Examples of the polar group include an amino group, a hydroxyl group, a carboxyl group, a sulfonic acid group, a phenyl group, an epoxy group, a mercapto group, a methacrylic group, a phenol group, a polyether group, and a fluorine group. Among the polar groups, for example, the amino group is preferable as the polar group from the viewpoint that the affinity with the inner peripheral surface of the pressurizing belt 40 is high and the increase in rotational torque of the pressurizing belt 40 is easily suppressed.

Specific examples of the lubricant 62 include modified oils such as an alkyl-modified silicone oil (such as a dimethyl-modified silicone oil), an amino-modified silicone oil, a methylphenyl-modified silicone oil, an epoxy-modified silicone oil, a phenol-modified silicone oil, a polyether-modified silicone oil, and a fluorine-modified silicone oil.

Among these, for example, the amino-modified silicone oil is preferable as the lubricant 62 from the viewpoint that the affinity with the inner peripheral surface of the pressurizing belt 40 is high and the increase in rotational torque of the pressurizing belt 40 is easily suppressed.

The lubricant 62 may include other components in addition to the oil. Examples of such other components include a grease (such as a silicon grease), a thermally conductive agent, an antioxidant, a surfactant, silicone particles, an organic metal salt, and a hindered amine.

### (Image Forming Operation of Image Forming Apparatus)

Hereinafter, an image forming operation of the image forming apparatus according to the present exemplary embodiment will be described. Furthermore, an operation of forming a yellow image in the first process cartridge 10Y will be described as a representative of the image forming operation.

First, before the image forming operation, a surface of the photoreceptor 1Y is charged to, for example, about a potential of -600 V or more and -800 V or less by the charging roller 2Y.

The photoreceptor 1Y is formed by, for example, laminating a photosensitive layer on a conductive substrate. The photosensitive layer has, for example, properties in that this layer usually has a high resistance, but in a case of being irradiated with the laser beam 3Y, a specific resistance of a portion irradiated with the laser beam changes. Therefore, via the exposure device 3, the laser beam 3Y is output to a surface of the charged photoreceptor 1Y according to the image data for yellow transmitted from the control unit which is not shown in the drawing. The photosensitive layer on the surface of the photoreceptor 1Y is irradiated with the laser beam 3Y such that an electrostatic latent image of a yellow printing pattern is formed on the surface of the photoreceptor 1Y.

In this manner, the electrostatic latent image formed on the photoreceptor 1Y is rotated to a development position as the photoreceptor 1Y travels. At the development position, the electrostatic latent image on the photoreceptor 1Y is developed to form a visible image (toner image) by the development device 4Y.

For example, a developer including a yellow toner and a carrier is housed in the development device 4Y. The yellow toner is frictionally charged by being stirred inside in the development device 4Y, and has the same polarity (negative polarity) as the charged electric charge on the photoreceptor 1Y. As the surface of the photoreceptor 1Y passes through the development device 4Y, the yellow toner electrostatically adheres only to a neutralized latent image part on the surface of the photoreceptor 1Y, and the latent image is developed by the yellow toner. The photoreceptor 1Y on which the yellow toner image is formed continues to travel, and the developed toner image on the photoreceptor 1Y is transported to a primary transfer position.

In a case where the yellow toner image on the photoreceptor 1Y is transported to the primary transfer position, a primary transfer bias is applied to the primary transfer roller 5Y, an electrostatic force from the photoreceptor 1Y toward the primary transfer roller 5Y acts on the toner image, and the toner image on the photoreceptor 1Y is transferred to the intermediate transfer belt 20. The transfer bias applied at this time has a polarity (+) opposite to the polarity (-) of the toner. For example, in the first process cartridge 10Y, the transfer bias is subjected to a constant current control to about +10 µA by the controller (not shown).

In addition, the primary transfer biases applied to the primary transfer rollers 5M, 5C, and 5K after the second process cartridge 10M are also controlled in the same manner.

Thus, the intermediate transfer belt 20 to which the yellow toner image is transferred by the first process cartridge 10Y is sequentially transported through the second to fourth process cartridges 10M, 10C, and 10K, and the toner images of the respective colors are superimposed and transferred in layers in the same manner.

The intermediate transfer belt 20, to which toner images of all colors are transferred in layers through the first to fourth process cartridges, reaches a secondary transfer section configured with the intermediate transfer belt 20, the support roller 24 in contact with the inner peripheral surface of the intermediate transfer belt 20, and a secondary transfer roller (an example of a secondary transfer device) 26 disposed on the image holding surface side of the intermediate transfer belt 20. On the other hand, the recording medium P is fed to the gap between the secondary transfer roller 26 and the intermediate transfer belt 20 via feeding mechanism, and secondary transfer bias is applied to the support roller 24. The transfer bias applied at this time has the same polarity (-) as the polarity (-) of the toner, an electrostatic force from the intermediate transfer belt 20 toward the recording medium P acts on the toner image, and the toner image on the intermediate transfer belt 20 is transferred to the recording medium P. The secondary transfer bias at this time is determined according to the resistance detected by a resistance detection section (not shown) that detects the resistance of the secondary transfer section, and is controlled at a constant voltage thereof.

The intermediate transfer belt 20, the primary transfer roller 5Y, and the secondary transfer roller 26 correspond to an example of the transfer device.

After that, the recording medium P is sent to the fixing device 28, and inserted into a contact region formed by a pressure contact between the heating roll 30 rotationally driven in a direction of the arrow and the pressurizing belt 40. At this time, the recording medium P is inserted so that a surface of the recording medium P, on which an unfixed toner image has been formed, faces a surface of the heating roll 30. In a case where the recording medium P passes through the contact region, heat and pressure are applied to the recording medium P so that the unfixed toner image is fixed to the recording medium P. The recording medium after fixing passes through the contact region, and then, is peeled off from the heating roll 30, and discharged from the fixing device 28.

In this manner, a fixing treatment is performed and the image is permanently fixed onto the recording medium P. The recording medium P, on which the fixing of the color image has been completed, is transported to a discharge section, and a series of color image forming operations is completed.

### Examples

Hereinafter, Examples will be described below; however, the present invention is not limited to these Examples. In the following description, all "parts" and "%" are in terms of mass unless otherwise specified.

### <Manufacture of Pressurizing Belt>

### (Manufacture of Pressurizing Belt (1))

A silicone-based release agent was applied onto a surface of an aluminum-made cylindrical core body having a roughness shape formed on the surface by a shot blasting processing, and a baking treatment was performed at 300°C for 1 hour. Then, the surface was coated with a solution of a polyimide (PI) precursor in N-methylpyrrolidone and dried at 100°C for 1 hour. As a result, a resin base material layer constituting an inner peripheral surface of a pressurizing belt was formed.

Next, an outer peripheral surface of the resin base material layer was coated with a fluororesin dispersion (specifically a PTFE dispersion), dried in a baking furnace at 60°C for 10 minutes, and then gradually dried to 380°C. After baking for 20 minutes, the resin base material layer was cooled to room temperature to form a release layer.

Then, the resin base material layer, on which the release layer had been formed, was withdrawn from the core body and cut to a target size by a cutting machine to obtain a pressurizing belt (1).

### (Manufacture of Pressurizing Belt (2))

A silicone-based release agent was applied onto a surface of an aluminum-made cylindrical core body having a roughness shape formed on the surface by a shot blasting processing, and a baking treatment was performed at 300°C for 1 hour. Then, the surface was dip-coated with a varnish having a polyimide resin dissolved in N-methylpyrrolidone, and dried at 120°C for 1 hour. As a result, a resin base material layer constituting an inner peripheral surface of a pressurizing belt was formed.

Next, the outer peripheral surface of the resin base material layer was coated with a fluororesin dispersion (specifically a PTFE dispersion), dried in a baking furnace at 60°C for 10 minutes, and then gradually dried to 320°C. After baking for 20 minutes, the resin base material layer was cooled to room temperature to form a release layer.

Then, the resin base material layer, on which the release layer had been formed, was withdrawn from the core body and cut to a target size by a cutting machine to obtain a pressurizing belt (2).

### (Manufacture of Pressurizing Belt (3))

Polyether ether ketone (PEEK) resin pellets (450G manufactured by Victrex plc.) were put into a material supply hopper inside of a single-screw extrusion molding machine, a barrel temperature was set to 360°C, and a tubular die temperature for discharging the resin was set to 380°C. Immediately after the resin was melt-extruded while being taken up by a take-up machine, the inner peripheral surface of the cylindrical molten resin was brought into contact with a surface of a 30 mm cylindrical sizing die, and cooling air was blown into the outer peripheral surface to cool the film. The cooled film was withdrawn in a cylindrical shape and cut with a cutting machine to obtain a pressurizing belt (3).

### (Manufacture of Pressurizing Belt (4))

Polyphenylene sulfide (PPS) resin pellets (A900 manufactured by Toray Industries Inc.) were put into a material supply hopper inside of a single-screw extrusion molding machine, a barrel temperature was set to 260°C, and a tubular die temperature for discharging the resin was set to 300°C. Immediately after the resin was melt-extruded while being taken up by a take-up machine, the inner peripheral surface of the cylindrical molten resin was brought into contact with a surface of a 30 mm cylindrical sizing die, and cooling air was blown into the outer peripheral surface to cool the film. The cooled film was withdrawn in a cylindrical shape and cut with a cutting machine to obtain a pressurizing belt (4).

### <Manufacture of Sliding Sheet>

### (Manufacture of Sliding Sheet (1))

A polyether ether ketone (PEEK) resin (Victrex 450G (manufactured by Victrex)) was melted by heating at 380°C using a twin-screw extrusion melt kneader (twin-screw melt kneading extruder L/D60 (manufactured by Parker Corporation)), 10 parts by mass of unmodified thermosetting silicone resin particles ("KMP590" manufactured by Shin-Etsu Chemical Co., Ltd., average particle diameter = 2 µm) were supplied to 100 parts by mass of the melted PEEK resin from the side of the kneader using a side feeder, and melt-kneaded. The kneaded melt product was put into a water tank to be cooled and solidified, and cut to a target size to obtain mixed resin pellets blended with silicone resin particles.

The obtained mixed resin pellets were put into a single-screw extruder, the melted mixed resin was extruded into a sheet shape from a T-die mold (melt discharge gap: 200 µm) heated to 380°C, and cooled by winding around a cooling roll at 190°C. A pressure of 40 MPa was applied to the cooled sheet between a roll having a 100-mesh SUS wire mesh wound around the roll surface heated to 250°C and a roll having heat-resistant silicone rubber on the surface to obtain a rough sheet. The rough sheet was cut into a predetermined size to obtain a sliding sheet (1).

### (Manufacture of Sliding Sheet (2))

A sliding sheet (2) was obtained in the same manner as for the sliding sheet (1), except that the amount of the unmodified thermosetting silicone resin particles ("KMP590" manufactured by Shin-Etsu Chemical Co., Ltd.) was 15 parts by mass.

### (Manufacture of Sliding Sheet (3))

A polyphenylene sulfide (PPS) resin (TORELINA A900 (manufactured by Toray Industries Inc.)) was melted by heating at 300°C using a twin-screw extrusion melt kneader (twin-screw melt kneading extruder L/D60 (manufactured by Parker Corporation)), 10 parts by mass of unmodified thermosetting silicone resin particles ("KMP590" manufactured by Shin-Etsu Chemical Co., Ltd., average particle diameter = 2 µm) were supplied to 100 parts by mass of the melted PPS resin from the side of the kneader using a side feeder, and melt-kneaded. The kneaded melt product was put into a water tank to be cooled and solidified, and cut to a target size to obtain mixed resin pellets blended with silicone resin particles.

The obtained mixed resin pellets were put into a single-screw extruder, the melted mixed resin was extruded into a sheet shape from a T-die mold (melt discharge gap: 200 µm) heated to 300°C, and cooled by winding around a cooling roll at 160°C. A pressure of 40 MPa was applied to the cooled sheet between a roll having a 100-mesh SUS wire mesh wound around the roll surface heated to 250°C and a roll having heat-resistant silicone rubber on the surface to obtain a rough sheet. The rough sheet was cut into a predetermined size to obtain a sliding sheet (3).

### (Manufacture of Sliding Sheet (4))

A sliding sheet (2) was obtained in the same manner as for the sliding sheet (1), except that the amount of the unmodified thermosetting silicone resin particles ("KMP590" manufactured by Shin-Etsu Chemical Co., Ltd.) was 20 parts by mass.

### (Manufacture of Sliding Sheet (C1))

A sliding sheet (C1) was obtained in the same manner as for the sliding sheet (1), except that 10 parts by mass of acrylic-modified silicone particles ("CHALINE R180S" manufactured by Nissin Chemical Industry Co., Ltd., average particle diameter = 30 µm) were used instead of the unmodified thermosetting silicone resin particles ("KMP590" manufactured by Shin-Etsu Chemical Co., Ltd.).

### (Manufacture of Sliding Sheet (C2))

A sliding sheet (C2) was obtained in the same manner as for the sliding sheet (1), except that acrylic-modified silicone resin particles ("CHALINE R200" manufactured by Nissin Chemical Industry Co., Ltd., average particle diameter = 2 µm) were pulverized into 10 parts by mass of the particles having an average particle diameter of 0.08 µm, which were used instead of the unmodified thermosetting silicone resin particles ("KMP590" manufactured by Shin-Etsu Chemical Co., Ltd.).

### (Manufacture of Sliding Sheet (C3))

A sliding sheet (C3) was obtained in the same manner as for the sliding sheet (1), except that acrylic-modified silicone resin particles ("CHALINE R200" manufactured by Nissin Chemical Industry Co., Ltd., average particle diameter = 2 µm) were pulverized into 25 parts by mass of the particles having an average particle diameter of 0.08 µm, which were used instead of the unmodified thermosetting silicone resin particles ("KMP590" manufactured by Shin-Etsu Chemical Co., Ltd.).

### (Manufacture of Sliding Sheet (C4))

A sliding sheet (C4) was obtained in the same manner as for the sliding sheet (1), except that acrylic-modified silicone resin particles ("CHALINE R200" manufactured by Nissin Chemical Industry Co., Ltd., average particle diameter = 2 µm) were pulverized into 5 parts by mass of particles having an average particle diameter of 0.08 µm, which were used instead of the unmodified thermosetting silicone resin particles ("KMP590" manufactured by Shin-Etsu Chemical Co., Ltd.).

### (Manufacture of Sliding Sheet (C5): Use of PTFE)

A sliding sheet (C5) was obtained in the same manner as for the sliding sheet (1), except that 10 parts by mass of polytetrafluoroethylene resin (PTFE) particles ("Microdispers-3000" manufactured by Techno Chemical Corporation, average particle diameter = 3 µm) were used instead of the unmodified thermosetting silicone resin particles ("KMP590" manufactured by Shin-Etsu Chemical Co., Ltd.).

### (Manufacture of Sliding Sheet (C6): Sheet Obtained by Impregnating Glass Cloth with Fluororesin)

A glass cloth impregnated with a fluororesin (product name: FGF400) manufactured by Chukoh Chemical Industries, Ltd., which obtained by impregnating a glass cloth with a PTFE resin dispersion, and subjecting the mixture to drying at 150°C, heating and baking at 380°C, and cooling, was used as a sliding sheet (C6).

### <Lubricant>

· Lubricant (1): Dimethyl silicone oil (manufactured by Shin-Etsu Chemical Co., Ltd., trade name "KF96")
· Lubricant (2): Amino-modified silicone oil (manufactured by Shin-Etsu Chemical Co., Ltd., trade name "KF8009")
· Lubricant (3): Dimethyl silicone oil-containing silicon grease ("G503" manufactured by Shin-Etsu Chemical Co., Ltd.)
· Lubricant (C1): Fluoropolyether oil ("Demnum S100" manufactured by Daikin Industries, Ltd.)
· Lubricant (C2): Fluoropolyether oil-containing PTFE grease ("HP300" manufactured by Mitsui Dupont Fluorochemical Co., Ltd.)

### <Examples 1 to 7 and Comparative Examples 1 to 8>

With the combinations shown in Table 1, a pressurizing belt, a sliding sheet, and a lubricant were attached to a fixing device of an image forming apparatus "Modified machine of APEOS PORT PrintC5570" manufactured by Fujifilm Business Innovation Corporation.

This apparatus was used as the image forming apparatus for each example and the following evaluation was performed.

### <Evaluation>

### (Increase in Torque of Pressurizing Belt)

An increase in torque of the pressurizing belt was measured as follows.

It is known that a torque required to drive a fixing roll correlates with a current value of a motor that drives the fixing roll. Thus, the motor current value was measured as substitutive characteristics (unit: A) for the torque. The increase in current value of the fixing roll driving motor was evaluated as an increase in torque of the pressurizing belt.

In a case where the drive torque is increased too much, a load is applied to a drive gear of the fixing roll, which is a drive source, resulting in a practical problem. In particular, as a phenomenon indicating a defect, a paper wrinkle is generated on paper for obtaining an image, or an abnormal noise of the gear is generated.

Here, it is known that the above-described quality problem occurs in a case where the motor current value is double the initial value.

In the present evaluation, 300,000 sheets of paper, which is the life of the fixing device, were fed. Thus, in a case where the motor current value is less than twice, it is determined that there is no problem (indicated as "∘"), and in a case where the motor current value is twice or more, it is determined that there is a problem ("indicated as "×")).

The results are shown in Table 1. Furthermore, details of the abbreviations in Table 1 are as follows.
PI: Polyimide resin
PAI: Polyamideimide resin
PEEK: Polyether ether ketone resin
PPS: Polyphenylene sulfide resin
PPSU: Polyphenylsulfone resin
PEI: Polyetherimide resin
PTFE: Polytetrafluoroethylene resin
KMP590: Unmodified thermosetting silicone resin particles ("KMP-590" manufactured by Shin-Etsu Chemical Co., Ltd., average particle diameter = 2 µm)
R180S: Acrylic-modified silicone particles ("CHALINE R180S" manufactured by Nissin Chemical Industries, Ltd., average particle diameter = 30 µm)
R200: Acrylic-modified silicone particles ("CHALINE R200" manufactured by Nissin Chemical Industries, Ltd., average particle diameter = 2 µm)
Microdispers-3000: Polytetrafluoroethylene resin (PTFE) particles ("Microdispers-3000" manufactured by Techno Chemical Corporation, average particle diameter = 3 µm)
DSO: Dimethyl silicone oil ("KF96" manufactured by Shin-Etsu Chemical Co., Ltd.)
ASO: Amino-modified silicone oil ("KF8009" manufactured by Shin-Etsu Chemical Co., Ltd.)
DSO-G: Dimethyl silicone oil-containing silicon grease (manufactured by Shin-Etsu Chemical Co., Ltd., trade name "G503")
FPEO: Fluoropolyether oil ("Demnum S100" manufactured by Daikin Industries, Ltd.)
FPEO-PTFEG: Fluoropolyether oil-containing PTFE grease ("HP300" manufactured by Mitsui Dupont Fluorochemical Co., Ltd.)

**[Table 1]**

| | | Example | | | | | | |
|---|---|---|---|---|---|---|---|---|
| | | 1 | 2 | 3 | 4 | 5 | 6 | 7 |
| Pressurizing belt | Type | (1) | (1) | (1) | (1) | (2) | (3) | (4) |
| | Inner peripheral surface-constituting material | PI | PI | PI | PI | PAI | PEEK | PPS |
| Sliding sheet | Type | (1) | (2) | (3) | (4) | (1) | (1) | (1) |
| | Sliding surface-constituting resin | PEEK | PEEK | PPS | PEEK | PEEK | PEEK | PEEK |
| | Resin particle materials Average particle diameter/content (%) | KMP590 2 µm/10% | KMP590 2 µm/15% | KMP590 2 µm/10% | KMP590 2 µm/20% | KMP590 2 µm/10% | KMP590 2 µm/10% | KMP590 2 µm/10% |
| | Rsk | 0.5 | 0.25 | 0.45 | 0.25 | 0.5 | 0.5 | 0.5 |
| | Surface exposure rate (%) of resin particles | 3 | 5 | 2 | 5 | 3 | 3 | 3 |
| Lubricant | Type | (1) | (2) | (2) | (3) | (2) | (2) | (2) |
| | Lubricant | DSO | ASO | ASO | DSO-G | ASO | ASO | ASO |
| Evaluation | Increase in current value of fixing roll driving motor | 1.3 times initial value | 1.1 times initial value | 1.2 times initial value | 1.2 times initial value | 1.6 times initial value | 1.7 times initial value | 1.8 times initial value |
| | Determination | ○ | ○ | ○ | ○ | ○ | ○ | ○ |

| | | Comparative Example | | | | | | | |
|---|---|---|---|---|---|---|---|---|---|
| | | 1 | 2 | 3 | 4 | 5 | 6 | 7 | 8 |
| Pressurizing belt | Type | (1) | (1) | (1) | (1) | (1) | (1) | (1) | (1) |
| | Inner peripheral surface-constituting material | PI | PI | PI | PI | PI | PI | PI | PI |
| Sliding sheet | Type | (CI) | (C2) | (C3) | (C4) | (C5) | (C5) | (C5) | (C6) |
| | Sliding surface-constituting resin | PEEK | PEEK | PEEK | PEEK | PEEK | PEEK | PEEK | PTFE |
| | Resin particle materials Average particle diameter/content (%) | R180S 30 µm/10% | R200 pulverized 0.08 µm/10% | R200 pulverized 0.08 µm/25% | R200 pulverized µm/5% | Microdispers-3000 3 µm/10% | 3000 3 µm/10% | Microdispers-3000 3 µm/10% | Sheet with PTFE resin impregnated in glass cloth |
| | Rsk | 1.2 | 0.8 | 1.2 | 0.3 | 0.5 | 0.5 | 0.5 | - |
| | Surface exposure rate (%) of resin particles | 5 | 3 | 6 | 1 | 3 | 3 | 3 | - |
| Lubricant | Type | (2) | (2) | (2) | (2) | (C1) | (C2) | (2) | (2) |
| | Lubricant | ASO | ASO | ASO | ASO | FPEO | FPEO-PTFEG | ASO | ASO |
| Evaluation | Increase in current value of fixing roll driving motor | 2.6 times initial value | 2.2 times initial value | 2.4 times initial value | 2.5 times initial value | 3 times initial value | 2.8 times initial value | 3.2 times initial value | 3 times initial value |
| | Determination | × | × | × | × | × | × | × | × |

From the results, it can be seen that in the present Examples, the maintainability of sliding resistance of the sliding member is excellent, as compared with Comparative Examples.

In addition, in the present Examples, it can be seen that the increase in rotational torque of the pressurizing belt is suppressed, as compared with Comparative Examples.

The present exemplary embodiment includes the following aspects.
(((1))) A sliding member having a sliding surface comprising:
   a heat-resistant thermoplastic resin other than a fluororesin; and
   resin particles having a siloxane group other than the heat-resistant thermoplastic resin,
   in which an average particle diameter of the resin particles is 0.1 µm or more and 10 µm or less,
   a surface roughness Rsk of the sliding surface is 1.0 or less, and
   a surface exposure rate of the resin particles on the sliding surface is 2% or more.
(((2))) The sliding member according to (((1))),
   wherein the average particle diameter of the resin particles is 0.5 µm or more and 4 µm or less.
(3) The sliding member according to (((1))) or (((2))),
   wherein the surface roughness Rsk of the sliding surface is 0.6 or less.
(((4))) The sliding member according to any one of (((1))) to (((3))),
   wherein the surface exposure rate of the resin particles on the sliding surface is 3% or more.
(((5))) The sliding member according to any one of (((1))) to (((4))),
   wherein the heat-resistant thermoplastic resin is at least one resin selected from the group consisting of a polyether ether ketone resin, a polyphenylene sulfide resin, a polyetherimide resin, and a polyphenylsulfone resin.
(((6))) The sliding member according to any one of (((1))) to (((5))),
   wherein the heat-resistant thermoplastic resin is at least one resin selected from the group consisting of a polyether ether ketone resin and a polyphenylene sulfide resin.
(((7))) The sliding member according to any one of (((1))) to (((6))),
   wherein the resin particles are thermosetting silicone resin particles.
(((8))) The sliding member according to (((7))),
   wherein the thermosetting silicone resin particles are modified thermosetting silicone resin particles.
(((9))) The sliding member according to any one of (((1))) to (((8))),
   wherein a content of the resin particles is 1.0% by mass or more and 20.0% by mass or less with respect to the heat-resistant thermoplastic resin.
(((10))) The sliding member according to (((9))),
   wherein the content of the resin particles is 3% by mass or more and 25% by mass or less with respect to the heat-resistant thermoplastic resin.
(((11))) The sliding member according to any one of (((1))) to (((10))),
   wherein the average particle diameter of the resin particles is 0.5 µm or more and 4 µm or less,
   the surface roughness Rsk of the sliding surface is 0.6 or less, and
   the surface exposure rate of the resin particles on the sliding surface is 3% or more.
(((12))) The sliding member according to any one of (((1))) to (((11))),
   wherein the heat-resistant thermoplastic resin is at least one resin selected from the group consisting of a polyether ether ketone resin, a polyphenylene sulfide resin, a polyetherimide resin, and a polyphenylsulfone resin,
   a content of the resin particles is 1.0% by mass or more and 20.0% by mass or less with respect to the heat-resistant thermoplastic resin, and
   the resin particles are thermosetting silicone resin particles.
(((13))) A fixing device comprising:
   a first rotating body;
   a second rotating body disposed in contact with the first rotating body;
   a pressing member that is disposed in an inner peripheral surface of the second rotating body and presses the second rotating body against the first rotating body from the inner peripheral surface of the second rotating body;
   the sliding member according to any one of (((1))) to (((12))), interposed between the inner peripheral surface of the second rotating body and the pressing member; and
   a lubricant interposed between the inner peripheral surface of the second rotating body and the sliding member.
(((14))) The fixing device according to (((13))),
   wherein the inner peripheral surface of the second rotating body is configured to include a resin having at least one group selected from the group consisting of an amide group, an imide group, a ketone group, and a sulfide group.
(((15))) The fixing device according to (((13))) or (((14))),
   wherein the lubricant includes an oil having a siloxane group as a main chain.
(((16))) An image forming apparatus comprising:
   an image holder;
   a latent image forming device that forms a latent image on a surface of the image holder,
   a development device that develops the latent image into a toner image using a developer,
   a transfer device that transfers the toner image developed in a recording medium; and
   the fixing device according to any one of (((13))) to (((15))) that fixes the toner image to the recording medium.

The effects of the aspects are as follows.

According to (((1))), it is possible to provide a sliding member having excellent maintainability of sliding resistance, as compared with a sliding member having a sliding surface configured to include a glass cloth and a fluororesin impregnated in the glass cloth.

According to (((2))), it is possible to provide a sliding member having excellent maintainability of sliding resistance, as compared with a case where the average particle diameter of the resin particles is less than 0.5 µm or more than 4 µm.

According to (((3))), it is possible to provide a sliding member having excellent maintainability of sliding resistance, as compared with a case where the surface roughness Rsk of the sliding surface is more than 0.6.

According to (((4))), it is possible to provide a sliding member having excellent maintainability of sliding resistance, as compared with a case where the surface exposure rate of the resin particles on the sliding surface is less than 3%.

According to (((5))), it is possible to provide a sliding member having excellent maintainability of sliding resistance, as compared with a case where the heat-resistant thermoplastic resin is a fluororesin.

According to (((6))), it is possible to provide a sliding member having excellent maintainability of sliding resistance, as compared with a case where the heat-resistant thermoplastic resin is a polyphenylene sulfide resin.

According to (((7))), it is possible to provide a sliding member having excellent maintainability of sliding resistance, as compared with a case where the resin particles are fluororesin particles.

According to (((8))), it is possible to provide a sliding member having excellent maintainability of sliding resistance, as compared with a case where the thermosetting silicone resin particles are unmodified thermosetting silicone resin particles.

According to (((9))), it is possible to provide a sliding member having excellent maintainability of sliding resistance, as compared with a case where the content of the resin particles is less than 1.0% by mass or more than 20.0% by mass with respect to the heat-resistant thermoplastic resin.

According to (((10))), it is possible to provide a sliding member having excellent maintainability of sliding resistance, as compared with a case where the content of the resin particles is less than 3% by mass or more than 25% by mass with respect to the heat-resistant thermoplastic resin.

According to (((11))), it is possible to provide a sliding member having excellent maintainability of sliding resistance, as compared with a case where the average particle diameter of the resin particles is less than 0.5 µm or more than 4 µm, a case where the surface roughness Rsk of the sliding surface is more than 0.6, or a case where the surface exposure rate of the resin particles on the sliding surface is less than 3%.

According to (((12))), it is possible to provide a sliding member having excellent maintainability of sliding resistance, as compared with a case where the heat-resistant thermoplastic resin is a fluororesin, a case where the resin particles are fluororesin particles, or a case where the content of the resin particles is less than 1.0% by mass or more than 20.0% by mass with respect to the heat-resistant thermoplastic resin.

According to (((13))), a fixing device capable of forming an image having a reduced gloss unevenness while suppressing an increase in rotational torque of the second rotating body, as compared with a case where a sliding member having a sliding surface configured to include a glass cloth and a fluororesin impregnated in the glass cloth is applied, is provided.

According to (((14))), a fixing device capable of forming an image having a reduced gloss unevenness while suppressing an increase in rotational torque of the second rotating body, as compared with a case where an inner peripheral surface of the second rotating body is configured with a polyimide resin, is provided.

According to (((15))), a fixing device capable of forming an image having a reduced gloss unevenness while suppressing an increase in rotational torque of the second rotating body, as compared with a case where the lubricant is composed only of a fluoropolyether oil, is provided.

According to (((16))), an image forming apparatus capable of forming an image having a reduced gloss unevenness while suppressing an increase in rotational torque of the second rotating body of the fixing device, as compared with a case where a sliding member having a sliding surface configured to include a glass cloth and a fluororesin impregnated in the glass cloth is applied, is provided.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1Y, 1M, 1C, 1K: photoreceptor
2Y, 2M, 2C, 2K: charging roller
3Y, 3M, 3C, 3K: laser beam
3: exposure device
4Y, 4M, 4C, 4K: development device
5Y, 5M, 5C, 5K: primary transfer roller
6Y, 6M, 6C, 6K: photoreceptor cleaning device
10Y, 10M, 10C, 10K: process cartridge
20: intermediate transfer belt
20a: intermediate transfer body cleaning device
22: drive roller
24: support roller
26: secondary transfer roller
28: fixing device
30: heating roll
40: pressurizing belt
50: pressing pad
52: belt traveling guide
60: sliding sheet
62: lubricant
64: lubricant supply member
100: image forming apparatus
P: recording medium

## Claims

1. A sliding member (60) having a sliding surface comprising
a heat-resistant thermoplastic resin other than a fluororesin; and
resin particles having a siloxane group other than the heat-resistant thermoplastic resin,
wherein an average particle diameter of the resin particles included in the sliding surface as determined in accordance with a method described in paragraph [0034] of the description is 0.1 µm or more and 10 µm or less,
a surface roughness Rsk of the sliding surface as determined in accordance with a method described in paragraph [0038] of the description is 1.0 or less, and
a surface exposure rate of the resin particles on the sliding surface as determined in accordance with a method described in paragraph [0040] of the description is 2% or more,
the sliding member (60) being **characterized by** containing no fluororesin particle on the sliding surface.

2. The sliding member (60) according to claim 1,
wherein the average particle diameter of the resin particles is 0.5 µm or more and 4 µm or less.

3. The sliding member (60) according to claim 1 or 2,
wherein the surface roughness Rsk of the sliding surface is 0.6 or less.

4. The sliding member (60) according to any one of claims 1 to 3,
wherein the surface exposure rate of the resin particles on the sliding surface is 3% or more.

5. The sliding member (60) according to any one of claims 1 to 4,
wherein the heat-resistant thermoplastic resin is at least one resin selected from the group consisting of a polyether ether ketone resin, a polyphenylene sulfide resin, a polyetherimide resin, and a polyphenylsulfone resin.

6. The sliding member (60) according to any one of claims 1 to 5,
wherein the heat-resistant thermoplastic resin is at least one resin selected from the group consisting of a polyether ether ketone resin and a polyphenylene sulfide resin.

7. The sliding member (60) according to any one of claims 1 to 6,
wherein the resin particles are thermosetting silicone resin particles.

8. The sliding member (60) according to claim 7,
wherein the thermosetting silicone resin particles are modified thermosetting silicone resin particles.

9. The sliding member (60) according to any one of claims 1 to 8,
wherein a content of the resin particles is 1.0% by mass or more and 20.0% by mass or less with respect to the heat-resistant thermoplastic resin.

10. The sliding member (60) according to claim 9,
wherein the content of the resin particles is 3% by mass or more and 25% by mass or less with respect to the heat-resistant thermoplastic resin.

11. The sliding member (60) according to any one of claims 1 to 10,
wherein the average particle diameter of the resin particles is 0.5 µm or more and 4 µm or less,
the surface roughness Rsk of the sliding surface is 0.6 or less, and
the surface exposure rate of the resin particles on the sliding surface is 3% or more.

12. The sliding member (60) according to any one of claims 1 to 11,
wherein the heat-resistant thermoplastic resin is at least one resin selected from the group consisting of a polyether ether ketone resin, a polyphenylene sulfide resin, a polyetherimide resin, and a polyphenylsulfone resin,
a content of the resin particles is 1.0% by mass or more and 20.0% by mass or less with respect to the heat-resistant thermoplastic resin, and
the resin particles are thermosetting silicone resin particles.

13. A fixing device (28) comprising:
a first rotating body (30);
a second rotating body (40) disposed in contact with the first rotating body (30);
a pressing member (50) that is disposed in an inner peripheral surface of the second rotating body (40) and presses the second rotating body (40) against the first rotating body (30) from the inner peripheral surface of the second rotating body (40);
the sliding member (60) according to any one of claims 1 to 12, interposed between the inner peripheral surface of the second rotating body (40) and the pressing member (50); and
a lubricant (62) interposed between the inner peripheral surface of the second rotating body (40) and the sliding member (60).

14. The fixing device (28) according to claim 13,
wherein the inner peripheral surface of the second rotating body (40) is configured to include a resin having at least one group selected from the group consisting of an amide group, an imide group, a ketone group, and a sulfide group.

15. The fixing device (28) according to claim 13 or 14,
wherein the lubricant (62) includes an oil having a siloxane group as a main chain.

16. An image forming apparatus (100) comprising:
an image holder (1Y);
a latent image forming device (2Y, 3) that forms a latent image on a surface of the image holder (1Y),
a development device (4Y) that develops the latent image into a toner image using a developer,
a transfer device (5Y) that transfers the toner image developed in a recording medium; and
the fixing device (28) according to any one of claims 13 to 15, fixing the toner image on the recording medium (P).
